# EUROPÄISCHE PATENTANMELDUNG

(11) **EP 1 562 195 A2**
(43) Veröffentlichungstag der Anmeldung: **10.08.2005**
(21) Anmeldenummer: 05001163.4
(22) Anmeldetag: 21.01.2005
(51) Int. Cl.: G11B 23/28, G11B 23/30

(54) **Sicherungsvorrichtug für Datenträger**

(30) Priorität: 04.02.2004 DE 102004005654
(71) Anmelder: Metronic AG, 97209 Veitshöchheim (DE)
(72) Erfinder: Schmitt, Peter, Dipl.-Phys., 97074 Würzburg (DE)
(74) Vertreter: COHAUSZ DAWIDOWICZ HANNIG & PARTNER

(57) **Zusammenfassung**

Die Erfindung betrifft eine Sicherungsvorrichtung für Datenträger die an oder in einem Datenträger (1) oder dessen Gehäuse befestigbar/befestigt ist und bei der mittels einer, insbesondere für den Datenträger (1) vorgesehenen, Schreib/Lesevorrichtung (10) Daten mit der Sicherungsvorrichtung (3), insbesondere bidirektional, austauschbar sind. Die Erfindung betrifft weiterhin einen Datenträger, insbesondere optischer Datenträger (1), mit einer solchen Sicherungsvorrichtung (3) sowie ein Verfahren zur Sicherung von Datenträgern gegen unerlaubtes Kopieren, bei dem in eine auf/an einem Datenträger (1) angeordnete elektronische Sicherungsvorrichtung (3) Daten eingeschrieben, durch die Sicherungsvorrichtung (3) verarbeitet und das Ergebnis der Verarbeitung aus der Sicherungsvorrichtung (3) ausgelesen wird.

## Beschreibung

Die Erfindung betrifft eine Sicherungsvorrichtung für Datenträger. Datenträger, insbesondere optische Datenträger, werden in vielen Bereichen der Industrie und des täglichen Lebens verwendet. So werden beispielsweise Compact Discs (CDs) oder Digital Versatile Discs (DVDs) benutzt, um Software, Daten, Musik und Filme in komprimierter oder nicht komprimierter Form zu speichern.

Vorteilhaft bei dieser Art von Datenträgern ist, dass sie eine große Datenmenge aufnehmen können, preisgünstig herzustellen sind und eine lange Lebensdauer besitzen.

Ein großes Problem für die Industrie ist jedoch eine zunehmende Zahl unerlaubter Kopien, die zudem von immer professioneller arbeitenden Fälschern hergestellt und vertrieben werden. Daher werden bereits heute eine Reihe verschiedener Schutzmechanismen angewendet, mit dem Ziel, eine Kopie unmöglich zu machen oder sie zumindest zu erschweren.

Gleichzeitig werden jedoch die Kopiereinrichtungen und die Software zur Kopieerstellung immer besser, so dass der Kopierschutz auf einem Datenträger nur kurze Zeit funktioniert oder gar bei seinem Erscheinen bereits mit den entsprechenden, oft kommerziell erhältlichen Programmen umgangen werden kann und der Datenträger damit unerlaubt vervielfältigt werden kann.

Viele dieser Sicherheitsmechanismen arbeiten dadurch, dass in bestimmten Bereichen des Datenträgers, die für einen normalen Zugriff gesperrt sind, Daten abgelegt werden, auf die bei einer Sicherheitsabfrage zugegriffen werden kann.

Datenträger, die mit einem solchen Merkmal für eine Sicherheitsabfrage versehen sind lassen sich in der gleichen Art und Weise herstellen, wie konventionelle Datenträger, wodurch die Produktionskosten gleich bleiben. Nachteilig ist es, dass bereits eine Vielzahl von Kopierprogrammen ebenfalls auf diese Bereiche zugreifen kann und damit der Kopierschutz umgangen wird oder gar mitkopiert wird. Im letzteren Fall ist eine solche Kopie bzgl. ihres Dateninhalts nicht mehr vom Original zu unterscheiden.

Ebenso ist es bekannt, bei Datenträgern, wie beispielsweise CDs oder DVDs, dass das Auslesen von sicherheitsrelevanten Daten aus geschützten Bereichen erfolgt, wobei dies während des normalen Betriebs des zu schützenden Programms durchgeführt werden kann. Durch spezielle Softwareroutinen, welche die normalen Zugriffsbeschränkungen der Schreib-/Lesegeräte umgehen, wird beispielsweise einmal oder mehrfach während eines Programmlaufs das Vorhandensein des Originaldatenträgers, beispielsweise einer CD, überprüft.

Nachteilig bei solchen Verfahren ist es, dass ein solcher Schutz relativ einfach umgangen werden kann, da ein Raubkopierer lediglich den Teil der Software entfernen, umgehen oder ersetzen muss, welcher für die Abfrage der auf dem Datenträger hinterlegten Daten zuständig ist. In einem solchen Fall wird das konventionell kopierte Programm so verändert, dass keine Überprüfung mehr stattfindet.

Aufgabe der Erfindung ist es, eine Sicherungsvorrichtung für Datenträger bereit zu stellen, die es ermöglicht, einen ansonsten im Wesentlichen nicht veränderten Datenträger, beispielsweise optischen Datenträger, derart zu verändern oder zu erweitern, dass ein erhöhter Kopierschutz gegeben. Weiterhin ist es Aufgabe der Erfindung, einen Datenträger in Verbindung mit einer derartigen Sicherheitsvorrichtung bereit zu stellen, welcher mit konventionellen Produktionsverfahren kostengünstig hergestellt werden kann und dessen Schutzmechanismus anhand der Sicherheitsvorrichtung nicht oder nur schwer umgehbar ist.

Diese Aufgabe wird gemäß der Erfindung dadurch gelöst, dass die Sicherungsvorrichtung für Datenträger an oder in einem Datenträger oder dessen Gehäuse befestigbar/befestigt ist und mittels einer, insbesondere für den Datenträger vorgesehenen Schreib-/Lesevorrichtung Daten mit der Sicherungsvorrichtung, insbesondere bidirektional, austauschbar sind.

Gemäß der Erfindung kann es vorgesehen sein, konventionelle, derzeit bestehende Datenträger entweder schon beim Produktionsvorgang mit den erfindungsgemäßen Sicherungsvorrichtungen zu versehen oder nachträglich an bestehende Datenträger oder deren Gehäuse eine derartige Sicherungsvorrichtung anzubringen, wofür insbesondere eine entsprechende Ausnehmung vorgesehen sein kann.

Gemäß der Erfindung ist es demnach vorgesehen, dass Datenträger und Sicherungsvorrichtung zwei grundsätzlich körperlich verschiedene Einheiten darstellen, die miteinander verbindbar sind oder bereits herstellerseits verbunden sind. Hierbei unterscheiden sich insbesondere der Datenträger und die Sicherungsvorrichtung, die ihrerseits ebenso als ein Träger von Daten, nämlich sicherheitsrelevanter Daten, bezeichnet werden kann hinsichtlich der Art der Datenspeicherung bzw. -verarbeitung.

So kann beispielsweise mit Bezug auf herkömmliche optische Datenträger wie CDs und DVDs mit den entsprechenden, hierfür vorgesehenen Schreib/Lesegeräten z.B. den sogenannten Brennern zwar eine Manipulation, z.B. ein Beschreiben der Datenträger erfolgen, es ist jedoch nicht möglich, die sicherheitsrelevanten Merkmale der Sicherungsvorrichtung, die sich am oder im Datenträger befindet, ebenfalls mit diesen Schreib-/Lesevorrichtungen in der Art zu manipulieren, dass ein insbesondere körperliches Kopieren der Sicherungsvorrichtung bzw. der darin enthaltenen Merkmale möglich wäre. Es könnte dementsprechend von einem Raubkopierer zwar der Inhalt der Daten bzw. eine Software des optischen Datenträgers grundsätzlich kopiert werden, jedoch besteht keine Möglichkeit, die sicherheitsrelevanten Merkmale der Sicherheitsvorrichtung, die physikalisch getrennt, jedoch körperlich mit dem Datenträger verbunden ist, mit zu kopieren.

Gemäß der Erfindung kann es vorgesehen sein, dass eine Sicherungsvorrichtung, die an oder in einem Datenträger oder dessen Gehäuse befestigbar ist bzw. befestigt ist, sicherheitsrelevante Merkmale, wie beispielsweise eine Elektronik und/oder Daten umfasst, die mittels einer Software, welche auf einem Computer abläuft, ausgelesen, geschrieben oder veränderbar sind. Bei der auf dem Computer ablaufenden Software handelt es sich dabei bevorzugt um diejenige Software, die auf dem Datenträger gespeichert und von diesem in den Computer heruntergeladen wird.

So kann eine Software, die mittels eines erfindungsgemäßen Datenträgers geliefert wird, während ihrer Installation und/oder Laufzeit überprüfen, ob der Datenträger mit der Sicherungsvorrichtung in der Schreib-/Lesevorrichtung eingelegt ist und ob es sich hierbei um den Originaldatenträger handelt.

Um die insbesondere bidirektionale Austauschbarkeit von Daten mit der Sicherungsvorrichtung, beispielsweise mittels des Computers und insbesondere der für den Datenträger vorgesehenen Schreib-/Lesevorrichtung zu ermöglichen, ist es gemäß einem bevorzugten Merkmal der Erfindung vorgesehen, dass die Sicherungsvorrichtung beispielsweise eine Elektronik umfasst, insbesondere zur Speicherung und/oder Verarbeitung von Daten.

So können beispielsweise ein Teil der Daten, die mit dem Datenträger geliefert werden, in der Sicherungsvorrichtung abgelegt sein, so dass sich die Gesamtheit der zu verwendenden Daten aus der Summe derjenigen des Datenträgers und derjenigen der Sicherungsvorrichtung ergeben und somit verwendbare Daten nur durch das Zusammenspiel von Sicherungsvorrichtung und Datenträger nutzbar sind.

Ebenso kann es vorgesehen sein, dass neben einer Speicherung sicherheitsrelevanter Daten oder allgemein jeglicher sicherheitsrelevanter Merkmale in der Sicherungsvorrichtung, die zum Auslesen und somit zum Überprüfen herangezogen werden können, auch Daten oder Merkmale in die Sicherungsvorrichtung hineingeschrieben werden können, beispielsweise um zu prüfen, ob eine derartige Sicherungsvorrichtung vorhanden ist.

Ebenso kann es vorgesehen sein, Daten bzw. Merkmale in die Sicherungsvorrichtung hineinzuschreiben, diese hineingeschriebenen Daten oder Merkmale aktiv von der Sicherungsvorrichtung verarbeiten und das Ergebnis der Verarbeitung wieder aus der Sicherungsvorrichtung herauszulesen und überprüfen zu lassen, wodurch eine Authentifizierung des Datenträgers ermöglicht wird. Auf diese Weise können Datenträger jeglicher Art, beispielsweise optische oder magnetische Datenträger, gegen unerlaubtes Kopieren gesichert werden, da eine Sicherheitsvorrichtung der erfindungsgemäßen Art mit den üblichen Schreib/Lesegeräten zum Lesen und Schreiben der Daten von oder auf die Datenträger nicht kopiert werden kann.

Gemäß einer vorteilhaften Ausgestaltung der Erfindung kann es vorgesehen sein, dass die Elektronik mittels einer für den Datenträger vorgesehenen Schreib/Lesevorrichtung, insbesondere drahtlos mit Energie versorgbar ist. Eine derartige Energieversorgung kann beispielsweise, jedoch nicht beschränkend auf diese Auflistung, optisch und/oder induktiv erfolgen. In einer besonderen bevorzugten Ausführung kann beispielsweise die Energieversorgung mittels einer Laseranordnung einer typischen, für optische Datenträger vorgesehenen Schreib/Lesevorrichtung durchgeführt werden. Hierfür kann eine Sicherheitseinrichtung wenigstens einen Energiewandler aufweisen, der Lichtenergie in elektrische Energie wandelt, was beispielsweise mittels Fotozellen etc. möglich ist.

In einer weiteren Ausführungsform kann es vorgesehen sein, die Datenübertragung zwischen Datenträger und Lesegerät mittels Funkwellen zu realisieren. In diesem Fall muss das Lesegerät für den interaktiven Datenaustausch mit dem Sicherungselement nicht notwendigerweise identisch mit dem Lesegerät des Datenträgers sein, sondern kann sich aufgrund der größeren Reichweite von Funkwellen in einer Entfernung auch außerhalb des Lesegerätes des Datenträgers befinden. Eine solche Art der Datenübertragung ist von den sogenannten Transpondersystemen her bekannt. In dieser Ausführung können die bereits bestehenden Lesegeräte für konventionelle Datenträger vorteilhafterweise weiterhin verwendet werden, es ist lediglich ein zusätzliches Sende- und Empfangsmodul zur Kommunikation mit der Sicherungseinrichtung erforderlich.

In einer weiteren bevorzugten Ausgestaltung kann es ebenso vorgesehen sein, dass auch die Datenübertragung von und zu der Sicherungsvorrichtung optisch und/oder induktiv bzw. magnetisch erfolgt, insbesondere ebenfalls mittels eines Lasers, wie er typischerweise in Schreib-/Lesevorrichtungen für optischen Datenträger vorgesehen ist.

Eine derartige Realisierung sowohl der Datenübertragung als auch der Energieübertragung für die Sicherungsvorrichtung hat den besonderen Vorteil, dass vorhandene Schreib-/Lesegeräte für konventionelle optische Datenträger oder auch andere Datenträger, beispielsweise magnetischer Art, rein hardwareseitig weiter verwendet werden können und lediglich eine Software zu verwenden ist, um die magnetischen oder optischen Schreib-/Leseeinheiten der herkömmlichen Schreib-/Lesevorrichtungen derart anzusteuern und zu betreiben, dass ein Beschreiben der Sicherungsvorrichtung mit Daten bzw. ein Lesen von Daten von den Sicherungsvorrichtungen möglich ist.

Ein Beschreiben und Lesen von Daten bzw. die Übertragung von Energie ist, insbesondere bei rotierenden Datenträgern, dann besonders einfach zu realisieren, wenn die Sicherungsvorrichtung konzentrisch in einem Abstand um die Drehachse des Datenträgers herum angeordnet ist. Auf diese Art und Weise kann die Schreib/Leseeinheit einer herkömmlichen Schreib-/Lesevorrichtung, beispielsweise der Laserkopf, im richtigen radialen Abstand zur Rotationsachse eingestellt werden, um sodann statt von dem Datenträger oder auf den Datenträger zu lesen bzw. zu schreiben, eine entsprechende Datenübertragung von oder zur Sicherungsvorrichtung vorzunehmen, insbesondere wobei gleichzeitig auf diese Art Energie übertragen wird.

Ebenso kann es vorgesehen sein, dass die Sicherungsvorrichtung an einer speziellen Stelle eines rotierbaren Datenträgers auf diesem angebracht ist und mit der Rotation mitbewegt wird, wobei eine Datenübertragung von oder zur Sicherungsvorrichtung synchronisiert immer dann erfolgt, wenn die Sicherungsvorrichtung die Schreib-/Leseeinheit einer herkömmlichen Schreib/Lesevorrichtung passiert. Auch hierfür kann es vorgesehen sein, dass die Schreib/Leseeinheit in einem vorher festzulegenden radialen Abstand zur Rotationsachse einzustellen ist, um die Datenübertragung vorzunehmen.

Es kann weiterhin vorgesehen sein in Schreib-/Lesevorrichtungen separate Einheiten zur Energie und/oder Datenübertragung einzusetzen, insbesondere wenn die Sicherungsvorrichtung an/oder in einem der Gehäuse eines Datenträgers angeordnet ist.

In einer besonders bevorzugten Ausführung der Sicherungsvorrichtung kann es vorgesehen sein, dass diese eine Elektronik umfasst und die Elektronik durch ein drucktechnisches Verfahren auf den Datenträger aufgebracht ist. Auf diese Art und Weise kann besonders einfach eine elektronische Sicherungsvorrichtung an einem Datenträger realisiert sein, die insbesondere besonders dünnbauend ausfällt.

Weitere Vorteile einer solchen Ausführung, die drucktechnisch mittels polymerer Elektronik realisiert werden kann , sind die mechanische Flexibilität von solchen Schaltungen und die kostengünstige Herstellbarkeit während des Produktionsprozesses der Datenträger.
Beispielsweise können durch diese Art der Realisierung polymere elektronische Schaltungen auf einem Datenträger aufgebracht werden, die z.B. über ein integriertes optisches Interface zum Schreib-/Lesekopf einer herkömmlichen Schreib-/Lesevorrichtung, beispielsweise der Lasereinheit eines CD- oder DVD-Brenners oder auch nur eines Lesegerätes Daten und Informationen austauscht.

Aufgrund der Möglichkeit, eine Elektronik in der Sicherungsvorrichtung z.B. durch Drucktechnik zu realisieren, kann diese Sicherungsvorrichtung einen interaktiven Bestandteil mit dem Datenträger und insbesondere mit den auf diesem gespeicherten Daten oder einer Software bilden. Beispielsweise kann die Sicherungseinrichtung, die auch in einem für Daten gesperrten Bereich auf dem Datenträger ausgebildet sein kann, nur über spezielle Softwareroutinen angesprochen werden. Hierbei können abweichend von den bekannten Verfahren jedoch nicht bloß ausschließlich unveränderliche Daten ausgelesen, sondern variable Daten hineingeschrieben und/oder nach einer auf dem Datenträger bzw. der zugeordneten Sicherungsvorrichtung erfolgten aktiven Verarbeitung wieder durch Auslesen an ein im Computer laufendes Programm übergeben werden.

Realisiert werden kann dies beispielsweise durch die Verwendung einer aus aktiven und passiven elektronischen Bauelementen bestehenden elektronischen Baugruppe, die z.B. auch in einem separaten Produktionsprozess bekannterweise hergestellt werden kann.

Die Form der Baugruppe, bzw. der Sicherungsvorrichtung, kann hierbei so gewählt sein, dass sie auch in einem nachfolgenden Prozess in eine dafür vorgesehene Ausnehmung, z.B. Öffnung oder Vertiefung des Datenträgers oder seines Gehäuses, auf diesen übertragen werden kann.

Wie zuvor prinzipiell beschrieben, kann die Versorgung der Elektronik mit Energie über integrierte Elemente erfolgen, die eine Wandlung z.B. von Lichtenergie in elektrische Energie vornehmen, wie z.B. Fotozellen oder Solarzellen, so dass z.B. der Laserstrahl eines konventionellen Schreib-/Lesegerätes zur Energieübertragung verwendet werden kann.

Zusätzlich kann es vorgesehen sein, dass in der Sicherungsvorrichtung bzw. auf dem Datenträger Energiespeicher, z.B. Kondensatoren oder Akkumulatoren vorgesehen sind, die eine elektronische Schaltung in der Sicherungsvorrichtung während der Schreib-/Lesezeit der Schreib-/Lesevorrichtung mit Energie versorgen.

Alternativ kann die Energieeinkopplung wie zuvor grundsätzlich genannt, auch induktiv z.B. über aufgebrachte Spulen erfolgen, so dass für die Energieeintragung insbesondere auch die Rotation optischer Datenträger ausgenutzt werden kann. In diesem Fall kann beispielsweise innerhalb des Schreib-/Lesegerätes ein oder mehrere Magnete angeordnet werden, über die die Energieeinkopplung erfolgen kann.

Als Magnete können beispielsweise kunststoffgebundene flexible Magnetfolien z.B. mit einer Dicke von weniger als 1 mm verwendet werden, die in ein konventionelles Schreib-/Lesegerät an geeigneter Stelle eingebracht werden. Diese kunststoffgebundenen Magnete lassen sich in allen erdenklichen Formen herstellen und während des Herstellungsprozesses in unterschiedlicher Art vormagnetisieren, so dass beispielsweise eine ringförmige Magnetfolie erzeugt werden kann und deren magnetische Polarität sich ringsegmentweise ändert, insbesondere an der Oberfläche des Ringes.

Wird nun eine solche Folie beispielsweise konzentrisch zu der Position eines optischen Datenträgers, wie einer CD oder einer DVD in das Schreib-/Lesegerät eingesetzt, so können auf den erfindungsgemäßen Datenträger an entsprechend korrespondierenden Stellen Spulen angeordnet werden, so dass sich bei der normalen Rotation des Datenträgers eine effektive Induktion in der genannten Spule und damit eine sehr effektive Stromversorgung der erfindungsgemäßen elektronischen Sicherungsvorrichtung ergibt.

Hierbei können die Spulen beispielsweise direkt in/auf der Sicherungsvorrichtung oder auch hiervon räumlich getrennt angeordnet sein, wobei eine Energieübertragung in die Sicherungsvorrichtung vorgesehen sein kann. Hierfür können entsprechende elektrische Leiter auf dem z.B. optischen Datenträger vorgesehen sein, die ebenfalls beispielsweise durch drucktechnische Verfahren auf diesen aufgebracht sein können.

Für den vorbeschriebenen Datenaustausch einer Schreib-/Lesevorrichtung mit der erfindungsgemäßen Sicherungsvorrichtung bzw. einem damit ausgestatteten Datenträger kann wie vorgenannt ein bereits in der Schreib-/Lesevorrichtung vorhandener optischer Schreib-/Lesekopf eingesetzt werden, so dass es bevorzugt vorgesehen sein kann, in der Sicherungsvorrichtung mindestens ein optisches aktives Element vorzusehen, dessen Reflektionseigenschaften auf elektrischem Wege geändert werden können. Ebenso kann wenigstens ein in der Sicherungsvorrichtung angebrachtes Fotoelement vorgesehen sein, welches Informationen z.B. von einem modulierten Laserstrahl empfangen kann. Es kann ebenso vorgesehen sein, in Schreib-/Lesevorrichtungen separate Einheiten zum Beschreiben oder zum Lesen der erfindungsgemäßen Sicherungsvorrichtung vorzusehen.

Eine elektronische Sicherungsvorrichtung bzw. eine darin angeordnete elektronische Baugruppe kann beispielsweise als Speicher, Rechenelement etc. ausgeführt sein, insbesondere als ROM-Speicher, der in einem nachfolgenden Prozess einmalig mit individualisierten Informationen beschrieben werden kann. Ein derartiges Beschreiben kann beispielsweise während des Herstellungsprozesses erfolgen oder aber auch bei der erstmaligen Inbetriebnahme oder Installation beim Endkunden. Ebenso können Speicher eingesetzt werden, die wiederbeschreibbar sind.

Zur Realisierung einer bereits genannten Elektronik kann es beispielsweise vorgesehen sein, in besonderen Bereichen eines Datenträgers, dessen Oberfläche oder eines Gehäuses des Datenträgers, bevorzugt mittels drucktechnischer Verfahren organische Halbleiterstrukturen aufzubringen, die als elektronischer Speicher oder als Rechenelemente wirken können. Das Aufbringen derartiger Strukturen kann beispielsweise in mehreren Schritten, wie nachfolgend genannt, erfolgen:

Es kann ein elektrisches Leiterbahnmuster in Form von Kontakten, Verbindungen, Spulen drucktechnisch auf den Datenträger bzw. dessen Gehäuse aufgebracht werden. Zwischen aufgedruckte elektrische Kontakte, die gegebenenfalls zuvor ausgewählt werden, können weitere elektronische Komponenten, wie z.B. Widerstandselemente, aufgebracht werden. Ausgewählte Kontakte oder Leiterbahnmuster können mittels geeigneter Verfahren, wie beispielsweise Laserablationen etc. strukturiert werden, um so erforderliche feine Strukturen für die Erzeugung von Halbleiterelementen, wie beispielsweise Dioden, Transistoren, Solarzellen etc. zu schaffen. Halbleitermaterial kann in diese zuvor erzeugten Bereiche feiner Strukturen aufgebracht werden. Ebenso können auf die aufgebrachten Halbleitermaterialien Isolationsschichten aufgetragen werden, um eine Isolierung gegen weitere Schichten zu erreichen. Zur Verbindung einzelner elektrischer Kontakte innerhalb der erzeugten Schaltung oder zur Kontaktierung erzeugter Halbleiterstrukturen können weiterhin elektrische Leiterbahnmuster drucktechnisch aufgetragen werden.

Das Aufbringen der Leiterbahnen, elektronischer Komponenten wie Widerstandselemente etc., Halbleiter- und Isolationsmaterialien kann wie genannt durch geeignete Druckverfahren, beispielsweise durch Flexodruck, Siebdruck, Offsetdruck, Tiefdruck sowie mittels Tintenstrahldruck, Elektrofotografie, lonografie oder Magnetografie erfolgen. In einzelnen Fällen kann auch die zusätzliche Strukturierung entfallen, wenn beispielsweise die erforderlichen feinen Strukturen schon durch das ausgewählte Druckverfahren selbst erzeugt werden können.

In einer anderen Ausführungsform kann es weiterhin vorteilhaft sein, zusätzlich oder alternativ zu den zuvor beschriebenen Schritten konventionelle aktive oder passive elektronische Bauteile auf den Datenträger bzw. die schon zumindest teilweise realisierte Sicherungsvorrichtung aufzubringen. In einem derartigen Fall können die konventionellen Bauteile z.B. über zuvor aufgebrachte elektrisch leitende Klebstoffe mit den ausgewählten Kontakten leitfähig verbunden werden oder in einer anderen Ausführungsform in konventioneller Weise gelötet werden.

Das so entstehende Netzwerk aus elektronischen Bauteilen und Verbindungen kann eine Elektronik der Sicherungsvorrichtung bilden und so zu einem interaktiven Bestandteil von auf dem Datenträger befindlichen Daten oder einer Software werden.

Ebenso kann es vorgesehen sein, die Stromversorgung so zu realisieren, dass zumindest ein Teil der aufgebrachten, insbesondere drucktechnisch aufgebrachten Schaltung, als Foto- bzw. Solarzelle oder als Induktionsschleife ausgeführt ist, so dass wie zuvor beschrieben, die Energieübertragung mittels des Lasers eines Schreib-/Lesekopfes oder mittels zusätzlicher Magnete erfolgen kann.

Ausführungsformen der Erfindung sind in den nachfolgenden Figuren dargestellt.

Es zeigen:
- Figur 1:: einen Datenträger mit Sicherungsvorrichtung und magnetischer Energieübertragung;
- Figur 2:: einen Datenträger mit Aussparung zur Aufnahme eines Sicherungselementes;
- Figur 3:: eine Anordnung zur Datenübertragung und Energieübertragung in die Sicherungseinrichtung;
- Figur 4:: einen Datenträger mit optischer Energieübertragung und Datenübertragung;
- Figur 5:: einen Datenträger mit optischer oder magnetischer Energieübertragung und optischer Datenübertragung oder Funkdatenübertragung;

Es bezeichnen hierbei:
- 1: Datenträger
- 2: Elektronische Einheit
- 3: Sicherungseinrichtung
- 4: Spule
- 5: Ring
- 6: Ringsegment
- 7: Ausgleichsmasse
- 8: Energieempfänger
- 9: Optisch aktive Schicht
- 10: Schreib-/Lesegerät
- 11: Laser
- 12: Antenne
- 13: Sender und Empfänger

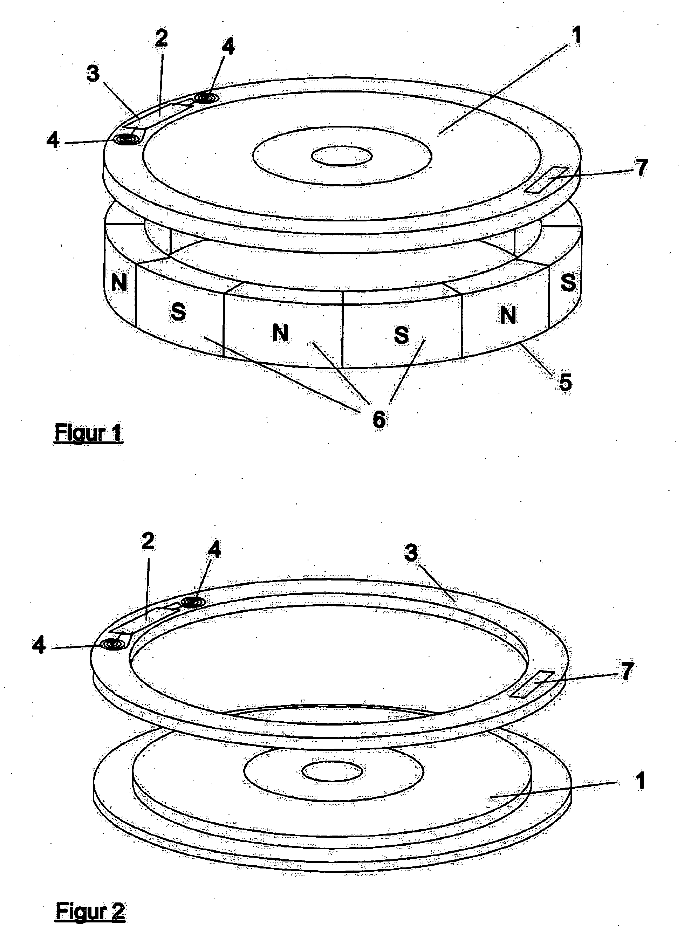

Die Figur 1 zeigt einen rotierenden Datenträger 1, beispielsweise eine CD oder DVD, die an ihrem äußeren Bereich eine Sicherungsvorrichtung 3 aufweist, in der neben einer elektronischen Einheit 2 beispielsweise zur Energieübertragung eine oder mehrere Spulen 4 angeordnet sind. Die Sicherungsvorrichtung 3 erstreckt sich konzentrisch um die mittlere Drehachse im äußeren Randbereich des Datenträgers. Um mechanische Unwuchten beim Betrieb des gesamten Datenträgers zu minimieren ist es zweckmäßig, die Sicherheitsvorrichtung 3 mit einer oder mehreren Ausgleichsmassen 7 zu versehen.

Zur Energieübertragung kann beispielsweise der in der Figur 1 dargestellte Ring 5 vorgesehen sein, dessen Ringsegmente 6 abwechselnde magnetische Polarität aufweisen.

Ein derartiger magnetischer Ring 5 kann innerhalb eines Schreib-/Lesegerätes angeordnet sein und sich im Wesentlichen konzentrisch zu dem rotierenden Datenträger 1 bzw. dessen Drehachse erstrecken.

Durch die Rotation des Datenträgers 1 wird die wenigstens eine darauf realisierte Spule 4 nachfolgend an den Bereichen unterschiedlicher magnetischer Polarität des Ringes 5 vorbei geführt, so dass sich durch die wechselnden Magnetfelder eine induzierte Spannung in der Spule 4 ergibt, die abgegriffen und für die Energieversorgung der Sicherungsvorrichtung 3 und insbesondere der darin angeordneten Elektronik 2 eingesetzt werden kann.

Das Lesen oder Schreiben von Daten von oder zu der Sicherungsvorrichtung 3 kann bei dieser Ausführung mittels z.B. eines Lasers erfolgen, wofür die Sicherungsvorrichtung 3 eine entsprechend lichtsensitive Beschichtung aufweist. Hierbei können beispielsweise die Reflektionseigenschaften der Oberfläche der Sicherungsvorrichtung 3 mittels des Laserstrahles geändert werden, so dass hierdurch Daten gelesen oder geschrieben werden können.

Die Figur 2 zeigt eine ähnliche Ausführung, bei der ebenfalls eine Sicherungsvorrichtung 3 in einem äußeren Randbereich eines optischen Datenträgers angeordnet ist, wofür dieser Datenträger eine Aussparung im Randbereich bzw. einen in der Dicke verringerten Randbereich aufweist, in den eine Sicherungsvorrichtung 3 eingesetzt werden kann. Zur Verdeutlichung sind bei der Darstellung in Figur 2 der Datenträger 1 und die Sicherungsvorrichtung 3 getrennt dargestellt.

Ein derartiges Einsetzen kann beispielsweise auch nachträglich erfolgen. Auf die beschriebene Art und Weise kann ein Datenträger 1, beispielsweise ein optischer Datenträger, nachträglich oder schon bei der Herstellung mit einem elektronischen aktiven und variablen Sicherheitsmerkmal versehen werden, wobei die Sicherungsvorrichtung 3 es gestattet, in z.B. konventionellen Schreib/Lesevorrichtungen interaktiv die darin gespeicherten Sicherheitsmerkmale und/oder Daten über Informationen abzurufen und/oder zu verändern.

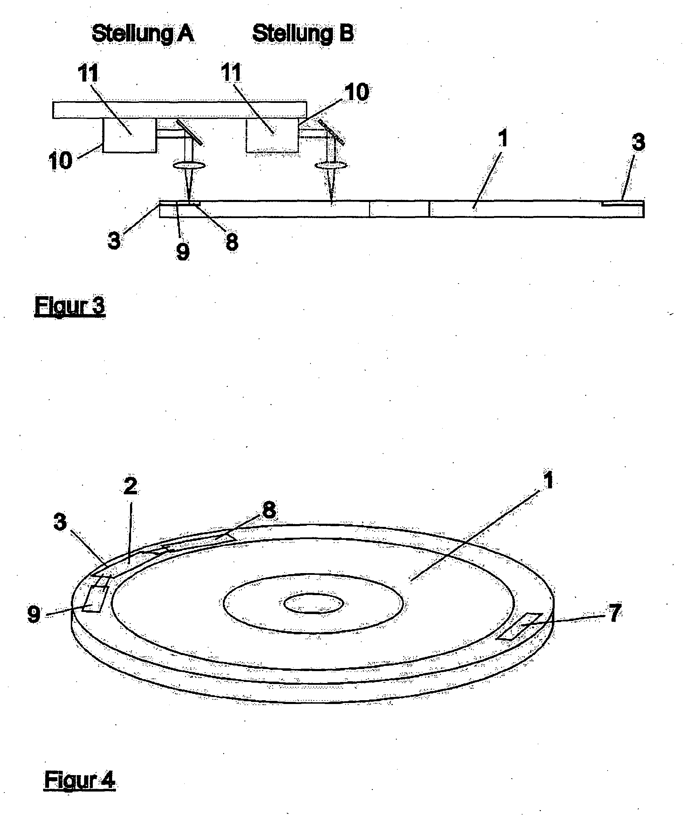

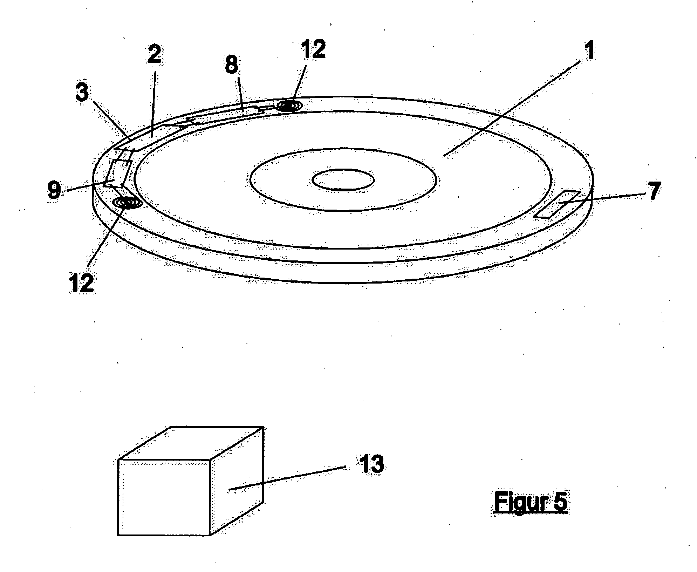

Die Figuren 3 und 4 zeigen eine Ausführung, bei der ebenfalls eine Sicherungsvorrichtung 3 in einem äußeren Randbereich eines optischen Datenträgers 1 angeordnet ist, wobei die Energieübertragung in die Sicherungsvorrichtung 3 mittels des im Schreib-/Lesegerät 10 vorhandenen Lasers 11 erfolgt.

Der Laser 11 dient hierbei in einer Stellung A als Sender von Energie zu einem in der Sicherungsvorrichtung 3 enthaltenen optischen Energieempfänger 8, z.B. in Form einer Photozelle.

Die Datenübertragung zwischen dem Schreib-/Lesegerät 10 und der Sicherungseinrichtung 3 erfolgt ebenfalls in einer Stellung A über die Leseeinrichtung 10 und eine optisch aktive Schicht 9 der Sicherungseinrichtung 3. Die optisch aktive Schicht 9 wird hierbei zum Übertragen von Informationen von der Leseeinrichtung zur Sicherungseinrichtung in einen Zustand geschaltet, der es ermöglicht, dass eine unterhalb der optisch aktiven Schicht 9 liegende Photozelle die vom Lesegerät ausgesendeten Signale empfangen kann.

Zur Übertragung von Informationen von der Sicherungseinrichtung 3 zum Lesegerät wird die optisch aktive Schicht 9 entsprechend der zu übertragenden Daten so moduliert, dass sich beispielsweise zur Übertragung von binären Signalen zwei Zustände erzeugen lassen, wobei ein Zustand z.B. eine hohe Reflexion für den auftreffenden Laserstrahl aufweist und der andere Zustand eine geringe Reflexion für den auftreffenden Laserstrahl. Auf diese Weise werden die gleichen Verhältnisse geschaffen, wie sie für das Auslesen von Daten in konventionellen optischen Datenträgern erforderlich sind. In einer Stellung B des Lesegerätes können in üblicher Weise gespeicherte Daten des Datenträgers ausgelesen werden.

Figur 5 zeigt eine weitere Ausführungsform bei der die Datenübertragung zwischen Datenträger und Lesegerät zusätzlich mittels Funkwellen realisiert ist. Die in der Sicherungseinrichtung 3 enthaltene Elektronik 2 beinhaltet in diesem Fall einen Funksender und Funkempfänger. Die Reichweite der Verbindungsstrecke kann durch ebenfalls in der Sicherungseinrichtung 3 vorhandene Antennen 12 gesteigert werden. Das Sende-/Empfangsgerät 13 für den interaktiven Datenaustausch mit der Sicherungseinrichtung kann getrennt vom Schreib-/Lesegerät installiert sein. Bei einer entsprechenden Auslegung der Antennen 12 können diese wie bereits beschrieben auch zur Energieübertragung verwendet werden.

## Patentansprüche

1. Sicherungsvorrichtung für Datenträger **dadurch gekennzeichnet, dass** sie an oder in einem Datenträger (1) oder dessen Gehäuse befestigbar/befestigt ist und mittels einer, insbesondere für den Datenträger (1) vorgesehenen, Schreib/Lesevorrichtung (10) Daten mit der Sicherungsvorrichtung (3), insbesondere bidirektional, austauschbar sind.

2. Sicherungsvorrichtung nach Anspruch 1, **dadurch gekennzeichnet, dass** sie nachträglich an bestehende Datenträger (1) oder deren Gehäuse anbringbar ist, insbesondere in einer dafür vorgesehenen Ausnehmung.

3. Sicherungsvorrichtung nach einem der vorherigen Ansprüche, **dadurch gekennzeichnet, dass** die Sicherungsvorrichtung (3) eine Elektonik (2) umfasst, insbesondere zur Speicherung und/oder Verarbeitung von Daten.

4. Sicherungsvorrichtung nach Anspruch 3, **dadurch gekennzeichnet, dass** die Elektronik (2) mittels einer für den Datenträger (1) vorgesehenen Schreib/Lesevorrichtung (10), insbesondere drahtlos, mit Energie versorgbar ist.

5. Sicherungsvorrichtung nach Anspruch 4, **dadurch gekennzeichnet, dass** die Energieversorgung optisch und/oder induktiv erfolgt.

6. Sicherungsvorrichtung nach einem der vorherigen Ansprüche, **dadurch gekennzeichnet, dass** die Datenübertragung optisch und/oder induktiv erfolgt, insbesondere mittels eines Lasers (11) in einer für optische Datenträger (1) vorgesehenen Schreib-/Lesevorrichtung (10).

7. Sicherungsvorrichtung nach einem der vorherigen Ansprüche, **dadurch gekennzeichnet, dass** sie sich bei rotierbaren Datenträgern (1) konzentrisch in einem Abstand um die Drehachse herum erstreckt.

8. Sicherungsvorrichtung nach einem der vorherigen Ansprüche, **dadurch gekennzeichnet, dass** die Elektronik (2) durch ein drucktechnisches Verfahren auf den Datenträger (1) aufgebracht ist.

9. Sicherungsvorrichtung nach einem der vorherigen Ansprüche, **dadurch gekennzeichnet, dass** sie einen interaktiven Bestandteil einer auf einem Datenträger (1) gespeicherten Software bildet.

10. Datenträger, insbesondere optischer Datenträger (1), mit einer Sicherungsvorrichtung (3) nach einem der vorherigen Ansprüche.

11. Verfahren zur Sicherung von Datenträgern gegen unerlaubtes Kopieren, **dadurch gekennzeichnet, dass** in eine auf/an einem Datenträger (1) angeordnete elektronische Sicherungsvorrichtung (3) Daten eingeschrieben, durch die Sicherungsvorrichtung (3) verarbeitet und das Ergebnis der Verarbeitung aus der Sicherungsvorrichtung (3) ausgelesen wird.

12. Verfahren nach Anspruch 11, **dadurch gekennzeichnet, dass** das Einschreiben und/oder Auslesen der Daten in/aus der Sicherungsvorrichtung (3) mittels einer für den Datenträger (1) vorgesehenen Schreib-/Lesevorrichtung (10) erfolgt, insbesondere mittels einer Laseranordnung (11) bei optischen Datenträgern (3).
